# EUROPÄISCHE PATENTSCHRIFT

(11) **EP 2 289 758 B1**
(45) Veröffentlichungstag und Bekanntmachung des Hinweises auf die Patenterteilung: **13.02.2013**
(21) Anmeldenummer: 10008351.8
(22) Anmeldetag: 11.08.2010
(51) Int. Cl.: B62B 3/06

(54) **Flurförderzeug**
Tiller truck
Transpalette

(30) Priorität: 24.08.2009 DE 102009038872
(43) Veröffentlichungstag der Anmeldung: 02.03.2011
(73) Patentinhaber: Jungheinrich Aktiengesellschaft, 22047 Hamburg (DE)
(72) Erfinder: Lohmann, Helmut, 27404 Nartum-Gyhum (DE)
(74) Vertreter: Hauck Patent- und Rechtsanwälte

(56) Entgegenhaltungen:
- EP-A2- 1 690 823
- DE-A1- 4 401 257
- DE-B- 1 210 537
- US-A- 2 217 704

## Beschreibung

Die Erfindung bezieht sich auf ein Flurförderzeug mit einem Antriebsteil, das mindestens ein Antriebsrad, einen Antriebsmotor und eine Lenkeinrichtung aufweist, mit der das Antriebsrad um eine vertikale Achse schwenkbar ist, einem Lastteil, das zwei parallele Radarme mit jeweils mindestens einem in einer Schwinge gelagerten Lastrad aufweist, und mindestens einem Hubzylinder, der zwischen dem Antriebsteil und dem Lastteil angeordnet ist, so dass das Lastteil durch Ausfahren eines Hubkolbens des Hubzylinders gegenüber dem Antriebsteil anhebbar ist, wobei die Schwingen mit den Lasträdern über ein Gestängegetriebe verschwenkbar sind.

Bei derartigen Flurförderzeugen bestimmt die vollständig eingefahrene Stellung des Hubkolbens die maximale abgesenkte Stellung des Lastteils gegenüber dem Antriebsteil und damit die Höhe des Lastteils an seinem dem Antriebsteil zugewandten Ende im Bereich der Radarmwurzeln. Die Höhe der Radarme in der maximal abgesenkten Stellung im Bereich der Lasträder wird durch die vollständig eingeschwenkte Stellung der Schwingen, die häufig durch einen Anschlag an den Radarmen vorgegeben ist, bestimmt. Um die vollständig abgesenkte Stellung im Bereich der Radarmwurzeln und im Bereich der Lasträder möglichst gleichzeitig zu erreichen, kann nach der Montage des Flurförderzeugs eine Einstellung der Gestängegetriebe vorgenommen werden. Dies ist jedoch konstruktiv aufwendig und bedeutet einen zusätzlichen Arbeitsschritt bei der Montage.

Davon ausgehend schlägt das europäische Patent EP 1 362 761 B1 ein Lagerbauteil vor, dass am oberen Ende des Hubzylinders angelenkt ist und über Langlöcher mit dem Lastteil verschraubt ist, so dass bei der Montage eine Relativverschiebung von Lagerbauteil und Lastteil möglich ist. Dadurch kann bei der Montage des Hubzylinders bzw. des Lagerbauteils eine eingefahrene Stellung des Hubkolbens mit der zum vollständig abgesenkten Zustand der Lastarme gehörigen Stellung der Schwingen in Übereinstimmung gebracht und das Lagerbauteil in dieser Anordnung fixiert werden.

Ein Flurförderzeug mit den Merkmalen des Oberbegriffs des Anspruchs 1 ist aus der Druckschrift DE 44 01 257 A1 bekannt geworden.

Davon ausgehend ist es die Aufgabe der Erfindung, ein Flurförderzeug mit den Merkmalen des Oberbegriffs des Anspruchs 1 zu Verfügung zu stellen, das einfach zu fertigen und zu montieren ist und bei dem eine Einstellung der maximal abgesenkten Position des Lastteils einfach möglich ist.

Diese Aufgabe wird gelöst durch das Flurförderzeug mit den Merkmalen des Anspruchs 1. Vorteilhafte Ausgestaltungen sind in den sich anschließenden Unteransprüchen angegeben.

Das erfindungsgemäße Flurförderzeug hat
- ein Antriebsteil, das mindestens ein Antriebsrad, einen Antriebsmotor und eine Lenkeinrichtung aufweist, mit der das Antriebsrad um eine vertikale Achse schwenkbar ist,
- ein Lastteil, das zwei parallele Radarme mit jeweils mindestens einem in einer Schwinge gelagerten Lastrad aufweist, und
- mindestens einen Hubzylinder, der zwischen dem Antriebsteil und dem Lastteil angeordnet ist, so dass das Lastteil durch Ausfahren eines Hubkolbens des Hubzylinders gegenüber dem Antriebsteil anhebbar ist, wobei die Schwingen mit den Lasträdern über ein Gestängegetriebe verschwenkbar sind, und
- eine Stellschraube, die in ein bezüglich des Lastteils fest angeordnetes Gewinde eingeschraubt ist und mit einem bezüglich des Antriebsteils fest angeordneten Anschlag zusammenwirkt oder umgekehrt, und deren Einstellung eine maximal abgesenkte Position des Lastteils gegenüber dem Antriebsteil vorgibt.

Das Flurförderzeug kann insbesondere ein Niederhub-Flurförderzeug sein, oder ein Hochhub-Flurförderzeug mit einem Hubgerüst und Zusatzhub, der auch als Initialhub bezeichnet wird.

Die Schwingen, in denen die Lasträder gelagert sind, werden auch als Radarmhebel bezeichnet und können über einen im Wesentlichen horizontal verlaufenden Bolzen schwenkbar an den Radarmen angelenkt sein.

Die Stellschraube ist in ein bezüglich des Lastteils fest angeordnetes Gewinde eingeschraubt und wirkt mit einem bezüglich des Antriebsteils fest angeordneten Anschlag zusammen oder umgekehrt. Oder umgekehrt bedeutet, dass alternativ die Stellschraube in ein bezüglich des Antriebsteils fest angeordnetes Gewinde eingeschraubt sein und mit einem bezüglich des Lastteils fest angeordneten Anschlag zusammenwirken kann.

Im Gegensatz zu den aus dem Stand der Technik bekannten Flurförderzeugen, bei denen die maximal abgesenkte Position des Lastteils gegenüber dem Antriebsteil in der Regel von einem internen Anschlag der Hubzylinder/-kolbenanordnung vorgegeben wird, bestimmt bei der Erfindung die Einstellung der Stellschraube diese Position. Mittels der Stellschraube kann die abgesenkte Position des Lastteils einfach und präzise sowie unabhängig von Toleranzen bei der Fertigung und Montage der Teile eingestellt werden. Es ist auch jederzeit eine einfache Korrektur oder verschleißbedingt wünschenswerte Nachjustierung möglich.

Um ein versehentliches Verstellen der Stellschraube zu verhindern, kann die Stellschraube nach erfolgter Justage festgelegt werden, beispielsweise durch ein Schraubensicherungsmittel oder eine Kontermutter.

Gemäß einer Ausgestaltung ist der Anschlag an einem Gehäuse des mindestens einen Hubzylinders ausgebildet. Beispielsweise kann er von einem Abschnitt einer dem freien Ende des Hubkolbens zugewandten Fläche des Hubzylindergehäuses gebildet sein. Dadurch wird die Begrenzung der Beweglichkeit des Hubkolbens nahe der Kraftübertragungslinie vorgenommen, was unerwünschte Biegemomente auf den Hubkolben verringert.

In einer Ausgestaltung ist das Gewinde, in das die Stellschraube eingeschraubt ist, im Bereich der Verbindung des Lastteils mit dem Hubzylinder oder Hubkolben ausgebildet. Auch durch diese Maßnahme befindet sich die Begrenzungseinrichtung nahe der Kraftübertragungslinie. Außerdem ermöglicht diese Anordnung des Gewindes und damit der Stellschraube bei herkömmlich aufgebauten Flurförderzeugen, bei denen der Verbindungsbereich zwischen Lastteil und Hubzylinder oder Hubkolben von außen, insbesondere von oben, gut zugänglich ist, eine einfache Einstellung der Stellschraube.

Gemäß einer Ausgestaltung ist der Hubzylinder oder der Hubkolben schwenkbar an einem Lagerbock angelenkt, der lösbar mit einem Lastrahmen des Lastteils oder einem Antriebsrahmen des Antriebsteils verbindbar ist. Die schwenkbare Verbindung ist für die erwünschte Kraftübertragung vorteilhaft und vermeidet auf die Hubzylinder/-Kolbenanordnung wirkende Biegemomente. Der Lagerbock dient der sicheren Anbindung des Hubzylinders bzw. Hubkolbens an den Last- oder Antriebsrahmen. Er kann insbesondere mit dem Last- oder Antriebsrahmen verschraubt sein. Bevorzugt weist der Lagerbock mindestens eine Gewindebohrung für eine Befestigungsschraube auf, die durch eine Bohrung in dem Last- oder Antriebsrahmen hindurchgeführt ist.

Gemäß einer Ausgestaltung ist das Gewinde, in das die Stellschraube eingeschraubt ist, in dem Lagerbock ausgebildet. Grundsätzlich kann das Gewinde auch unmittelbar in dem Last- oder Antriebsrahmen ausgebildet sein. Die Anordnung des Gewindes in dem Lagerbock hat jedoch den Vorteil, dass bei Schweiß- und Lackiervorgängen am Last- oder Antriebsrahmen keine Beeinträchtigung des Gewindes zu befürchten ist. Insbesondere in Kombination mit weiteren Gewindebohrungen im Lagerbock, die der Befestigung des Lagerbocks an dem Last- oder Antriebsrahmen dienen, ist die Ausbildung des Gewindes für die Stellschraube sehr einfach im gleichen Bearbeitungsschritt möglich.

Gemäß einer Ausgestaltung ist die Stellschraube durch eine Bohrung im Last- oder Antriebsrahmen hindurchgeführt und auf der von dem Lagerbock abgewandten Seite des Last- oder Antriebsrahmens ist eine Kontermutter angeordnet. Dadurch ergibt sich bei angezogener Kontermutter ein zusätzlicher Kraftschluss zwischen Lagerbock und Last- oder Antriebsrahmen. Außerdem ist die Stellschraube, insbesondere ein Kopf der Stellschraube, von der Unterseite des Antriebsrahmens bzw. insbesondere von der Oberseite des Lastrahmens aus gut zugänglich, was die Einstellung weiter vereinfacht.

Gemäß einer Ausgestaltung weist das Gestängegetriebe ein Einstellelement auf, mit dem die Höhe des mindestens einen Lastrads gegenüber dem Radarm in der vollständig abgesenkten Position des Lastteils gegenüber dem Antriebsteil einstellbar ist. Sofern zwei Gestängegetriebe vorhanden sind, die jeweils einem Radarm mit mindestens einem Lastrad zugeordnet sind, können diese auch jeweils ein Einstellelement aufweisen, so dass die Stellung des Lastrads gegenüber dem Radarm für jeden Radarm einzeln möglich ist. Durch das zusätzliche Einstellelement bzw. die zusätzlichen Einstellelemente kann die vollständig abgesenkte Position im Bereich der Radarmwurzel getrennt von der vollständig abgesenkten Position der Radarme gegenüber den Lasträdern eingestellt werden.

In einer Ausgestaltung sind zwei Hubzylinder in einem seitlichen Abstand voneinander angeordnet, denen jeweils eine Stellschraube mit einem zugehörigen Anschlag zugeordnet ist. Bei den beiden Hubzylindern kann es sich insbesondere um zwei Initialhubzylinder eines Hochhubfahrzeugs mit Zusatzhub handeln, bei denen es im Interesse der Stabilität im Standsicherheitstest bedeutsam ist, das die abgesenkte Position im Bereich beider Hubzylinder gleichzeitig mit der abgesenkten Position der Lastarme im Bereich der Lasträder erreicht wird. Durch die Verwendung von zwei gesonderten Stellschrauben ist diese Einstellung ohne weiteres möglich.

Gemäß einer Ausgestaltung ist der mindestens eine Hubzylinder mit dem Antriebsteil und der Hubkolben mit dem Lastteil verbunden. Bei der üblichen Anordnung von Antriebsteil und Lastteil mit Lastrahmen weist der Hubkolben dann nach oben. Insbesondere in Kombination mit einer Anordnung der Stellschraube im Bereich der Verbindung des Lastteils mit dem Hubkolben ergibt sich ein besonders kompakter Aufbau.

Die Erfindung wird nachfolgend anhand eines in vier Figuren dargestellten Ausführungsbeispiels näher erläutert. Es zeigen:
- Fig. 1: ein erfindungsgemäßes Flurförderzeug in einer schematischen Darstellung in einer Ansicht von der Seite,
- Fig. 2: das Flurförderzeug aus Fig. 1 in einer vereinfachten Darstellung von oben,
- Fig. 3: die Hubzylinder/-kolbenanordnung des Flurförderzeugs aus den Figuren 1 und 2 in einer perspektivischen Ansicht,
- Fig. 4: einen Ausschnitt der Anordnung der Fig. 3 in einer teilweise geschnittenen Darstellung.

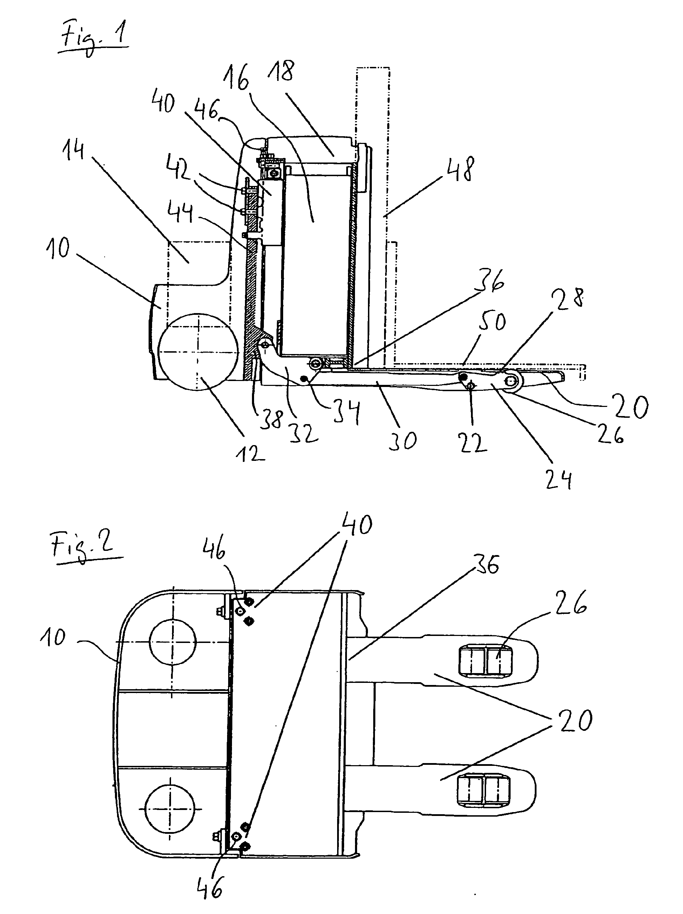

Fig. 1 zeigt ein Niederhub-Flurförderzeug mit einem Antriebsteil, das einen Antriebsrahmen 10, ein Antriebsrad 12 und einen Antriebsmotor 14 aufweist. Eine Batterie für den Antriebsmotor 14 befindet sich im Lastteil 16. Das Lastteil 16 weist einen Lastrahmen 18 und zwei Radarme 20 auf.

An jedem Radarm 20 ist über einen horizontal angeordneten Bolzen 22 ein Radarmhebel 24 schwenkbar angelenkt. An einem vorderen Ende des Radarmhebels 24 befindet sich jeweils mindestens ein Lastrad 26. Die vollständig abgesenkte Position der Radarme 20 gegenüber den Lasträdern 26 wird über jeweils einen an den Radarmhebeln 24 ausgebildeten Anschlag 28 bestimmt, der mit einer Unterseite der Radarme 20 zusammenwirkt.

Ein von dem Lastrad 26 entferntes Ende des Radarmhebels 24 ist über eine Stange 30 mit einem Umlenkhebel 32 verbunden. Der Umlenkhebel 32 ist über einen horizontal angeordneten Bolzen 34 schwenkbar mit dem Lastrahmen 18 verbunden, und zwar etwa im Bereich der Radarmwurzel 36. Ein von dem Bolzen 34 entferntes Ende des Umlenkhebels 32 ist an einem Befestigungsflansch 38 des Antriebsrahmens 10 angelenkt. Durch das vom Umlenkhebel 32 und der Stange 30 gebildete Gestängegetriebe wird der Radarmhebel 24 beim Anheben des Lastteils 16 gegenüber dem Antriebsteil ausgeschwenkt, so dass die Radarme 20 gegenüber den Lasträdern 26 angehoben werden.

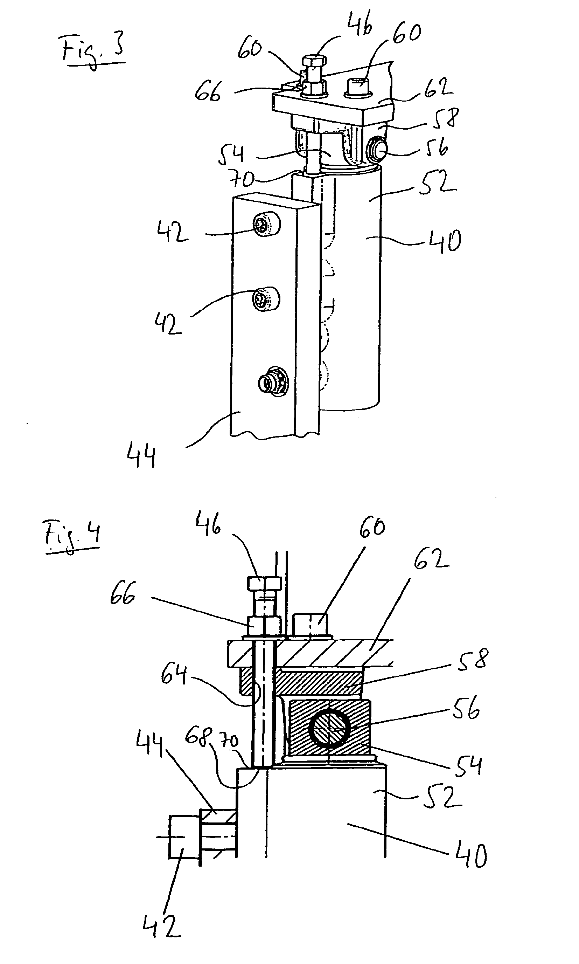

Zwischen Antriebsteil und Lastteil 16 ist ein Hubzylinder 40 angeordnet, so dass das Lastteil durch Ausfahren eines Hubkolbens 54 (siehe Figuren 3 und 4) des Hubzylinders 40 gegenüber dem Antriebsteil anhebbar ist. Der Hubzylinder 40 ist über zwei Befestigungsschrauben 42 mit einem sich vertikal nach oben erstreckenden Träger 44 des Antriebsrahmens 10 verschraubt.

Die abgesenkte Position des Lastteils 16 gegenüber dem Antriebsteil wird vorgegeben durch die Einstellung der Stellschraube 46. Die Stellschraube 46 ist vertikal angeordnet.

In der Fig. 1 strichpunktiert angedeutet ist eine Ausgestaltung des Flurförderzeugs mit einem Hubgerüst 48 und einem Lasttragmittel 50, wodurch das Nieder-Flurförderzeug zu einem Hochhub-Flurförderzeug mit Initialhub wird. Der Zusatz- oder Initialhub wird auf die bereits erläuterte Weise wie beim Niederhub-Flurförderzeug von den Hubzylindern 40 ausgeführt. Zusätzlich ist eine Anhebung des Lasttragmittels 50 durch das Hubgerüst 48 möglich.

In der Ansicht der Fig. 2 von oben ist die parallele Anordnung der beiden Radarme 20 erkennbar. Weiterhin ist die Anordnung zweier Hubzylinder 40 in einem seitlichen Abstand von einander ersichtlich. Jedem Hubzylinder 40 ist eine Stellschraube 46 zugeordnet.

Weitere Einzelheiten der Erfindung sind am besten in den Figuren 3 und 4 erkennbar, in denen dieselben Bezugszeichen wie in den Figuren 1 und 2 verwendet werden.

Der Hubzylinder 40 weist ein Gehäuse 52 auf, in dem axial beweglich ein Hubkolben 54 geführt ist. Der Hubkolben 54 ist über einen horizontal angeordneten Verbindungsbolzen 56 mit einem Lagerbock 58 schwenkbar verbunden. Der Lagerbock 58 weist zwei nicht dargestellte Gewindebohrungen auf, in die jeweils eine Befestigungsschraube 60 eingeschraubt ist. Die Befestigungsschrauben 60 sind durch Bohrungen in einem Befestigungsabschnitt 62 des Lastrahmens 18 hindurchgeführt, so dass der Lagerbock 58 lösbar mit dem Lastrahmen 18 verschraubt ist.

Zwei weitere Gewindebohrungen sind im Gehäuse 52 des Hubzylinders 40 ausgebildet. Über diese ist das Gehäuse 52 des Hubzylinders 40 mit dem vertikal angeordneten Träger 44 des Antriebsrahmens 10 verschraubt.

Wie am besten in der Fig. 4 erkennbar, ist die Stellschraube 46 durch eine Bohrung im Befestigungsabschnitt 62 des Lastrahmens 18 hindurchgeführt und in ein in dem Lagerbock 58 ausgebildetes Gewinde 64 eingeschraubt. Auf der von dem Lagerbock 58 abgewandten Seite des Befestigungsabschnitts 62 des Lastrahmens 18 ist eine Kontermutter 66 angeordnet.

Die Stellschraube 46, genauer genommen ihr unteres, von einem Sechskantkopf der Stellschraube 46 entferntes Ende 68, wirkt mit einem Anschlag 70 zusammen, der von einer oberen Fläche des Gehäuses 52 des Hubzylinders 40 gebildet ist.

## Patentansprüche

1. Flurförderzeug mit
• einem Antriebsteil, das mindestens ein Antriebsrad (12), einen Antriebsmotor (14) und eine Lenkeinrichtung aufweist, mit der das Antriebsrad (12) um eine vertikale Achse schwenkbar ist,
• einem Lastteil (16), das zwei parallele Radarme (20) mit jeweils mindestens einem in einer Schwinge (24) gelagerten Lastrad (26) aufweist, und
• mindestens einem Hubzylinder (40), der zwischen dem Antriebsteil und dem Lastteil (16) angeordnet ist, so dass das Lastteil (16) durch Ausfahren eines Hubkolbens (54) des Hubzylinders (40) gegenüber dem Antriebsteil anhebbar ist, wobei die Schwingen (24) mit den Lasträdern (26) über ein Gestängegetriebe (30, 32) verschwenkbar sind, **gekennzeichnet durch**
• eine Stellschraube (46), die in ein bezüglich des Lastteils (16) fest angeordnetes Gewinde (64) eingeschraubt ist und mit einem bezüglich des Antriebsteils fest angeordneten Anschlag (70) zusammenwirkt oder umgekehrt, und deren Einstellung eine maximal abgesenkte Position des Lastteils (16) gegenüber dem Antriebsteil vorgibt.

2. Flurförderzeug nach Anspruch 1, **dadurch gekennzeichnet, dass** der Anschlag (70) an einem Gehäuse (52) des mindestens einen Hubzylinders (40) ausgebildet ist.

3. Flurförderzeug nach einem der Ansprüche 1 oder 2, **dadurch gekennzeichnet, dass** das Gewinde (64), in das die Stellschraube (46) eingeschraubt ist, im Bereich der Verbindung des Lastteils (16) mit dem Hubzylinder (40) oder Hubkolben (54) ausgebildet ist.

4. Flurförderzeug nach einem der Ansprüche 1 bis 3, **dadurch gekennzeichnet, dass** der Hubzylinder (40) oder der Hubkolben (54) schwenkbar an einem Lagerbock (58) angelenkt ist, der lösbar mit einem Lastrahmen (18) des Lastteils (16) oder einem Antriebsrahmen (10) des Antriebsteils verbindbar ist.

5. Flurförderzeug nach Anspruch 4, **dadurch gekennzeichnet, dass** das Gewinde (64), in das die Stellschraube (46) eingeschraubt ist, in dem Lagerbock (58) ausgebildet ist.

6. Flurförderzeug nach Anspruch 5, **dadurch gekennzeichnet, dass** die Stellschraube (46) durch eine Bohrung im Lastrahmen (18) oder im Antriebsrahmen (10) hindurchgeführt ist und eine Kontermutter (66) auf der von dem Lagerbock (58) abgewandten Seite des Lastrahmens (18) bzw. des Antriebsrahmens (10) angeordnet ist.

7. Flurförderzeug nach einem der Ansprüche 1 bis 6, **dadurch gekennzeichnet, dass** das Gestängegetriebe (30, 32) ein Einstellelement aufweist, mit dem die Höhe des mindestens einen Lastrads (26) gegenüber dem Radarm (20) in der vollständig abgesenkten Position des Lastteils (16) gegenüber dem Antriebsteil einstellbar ist.

8. Flurförderzeug nach einem der Ansprüche 1 bis 7, **dadurch gekennzeichnet, dass** zwei Hubzylinder (40) in einem seitlichen Abstand voneinander angeordnet sind, denen jeweils eine Stellschraube (46) mit einem zugehörigen Anschlag (70) zugeordnet ist.

9. Flurförderzeug nach einem der Ansprüche 1 bis 8, **dadurch gekennzeichnet, dass** der mindestens eine Hubzylinder (40) mit dem Antriebsteil und der Hubkolben (54) mit dem Lastteil (16) verbunden ist.

## Claims

1. An industrial truck with
• a drive portion, which has at least one driven wheel (12), a drive motor (14) and a steering device by which the driven wheel (12) can be swung around a vertical axis,
• a load portion (16), which has two parallel wheel arms (20), each of them with at least one load wheel (26) mounted in a rocker (24), and
• at least one lifting cylinder (40), which is disposed between the drive portion and the load portion (16), so that the load portion (16) can be lifted with respect to the drive portion by extending a lifting piston (54) of the lifting cylinder (40), wherein the rockers (24) with the load wheels (26) can be swung via a gear rod assembly (30, 32), **characterised by**
• an adjusting screw (46), which is screwed into a thread (64) that is fixedly disposed with respect to the load portion (16) and which co-operates with a stop (70) that is fixedly arranged with respect to the drive portion or vice versa, and whose adjustment sets a maximum lowered position of the load portion (16) with respect to the drive portion.

2. The industrial truck according to claim 1, **characterised in that** the stop (70) is formed on a casing (52) of the at least one lifting cylinder (40).

3. An industrial truck according to claim 1 or 2, **characterised in that** the thread (64) into which the adjusting screw (46) is screwed, is formed in the region of the connection of the load portion (16) with the lifting cylinder (40) or with the lifting piston (54).

4. An industrial truck according to any one of claims 1 to 3, **characterised in that** the lifting cylinder (40) or the lifting piston (54) are pivotally hinged to a bearing block (58) which can be detachably connected to a load frame (18) of the load portion (16) or to a drive frame (10) of the drive portion.

5. The industrial truck according to claim 4, **characterised in that** the thread (64) into which the adjusting screw (46) is screwed is formed in the bearing block (58).

6. The industrial truck according to claim 5, **characterised in that** the adjusting screw (46) is guided through a bore in the load frame (18) or in the drive frame (10), and a locknut (66) is disposed on that side of the load frame (18) or of the drive frame (10), respectively, which faces away from the bearing block (58).

7. An industrial truck according to any one of claims 1 to 6, **characterised in that** the gear rod assembly (30, 32) has an adjusting element, by which the height of the at least one load wheel (26) with respect to the wheel arm (20) can be adjusted **in that** position of the load portion (16) which is completely lowered with respect to the drive portion.

8. An industrial truck according to any one of claims 1 to 7, **characterised in that** two lifting cylinders (40) are disposed in a lateral spacing from each other, an adjusting screw (46) with an associated stop (70) being associated to each of them.

9. An industrial truck according to any one of claims 1 to 8, **characterised in that** the at least one lifting cylinder (40) is connected to the drive portion, and the lifting piston (54) to the load portion (16).

## Revendications

1. Chariot de manutention avec
• une partie d'entraînement, qui a au moins une roue motrice (12), un moteur d'entraînement (14) et un dispositif de commande par lequel la roue motrice (12) peut être pivotée autour d'un axe vertical,
• une partie de charge (16), qui a deux bras de roue (20) parallèles dont chacun a au moins une roue de charge (26) montée dans une aile (24), et
• au moins un cylindre de levage (40), qui est disposé entre la partie d'entraînement et la partie de charge (16), de sorte que la partie de charge (16) peut être levée par rapport à la partie d'entraînement en faisant sortir un piston de levage (54) du cylindre de levage (40), les ailes (24) avec les roues de charge (26) étant pivotantes à travers un mécanisme à tringles (30, 32), **caractérisé par**
• une vis de réglage (46), qui est vissée dans un filet (64) disposé de manière fixe par rapport à la partie de charge (16) et qui coopère avec une butée (70) disposée de manière fixe par rapport à la partie d'entraînement ou vice versa, et dont l'ajustage prescrit une position de la partie de charge (16) maximalement abaissée par rapport à la partie d'entraînement.

2. Chariot de manutention selon la revendication 1, **caractérisé en ce que** la butée (70) est formée sur un boîtier (52) de l'au moins un cylindre de levage (40).

3. Chariot de manutention selon la revendication 1 ou 2, **caractérisé en ce que** le filet (64) dans lequel la vis de réglage (46) est vissée, est formé dans la région de connexion de la partie de charge (16) avec le cylindre de levage (40) ou avec le piston de levage (54).

4. Chariot de manutention selon l'une quelconque des revendications 1 à 3, **caractérisé en ce que** le cylindre de levage (40) ou le piston de levage (54) sont articulés de façon pivotante à un support de palier (58) qui peut être relié de façon amovible avec un cadre de charge (18) de la partie de charge (16) ou avec un cadre d'entraînement (10) de la partie d'entraînement.

5. Chariot de manutention selon la revendication 4, **caractérisé en ce que** le filet (64) dans lequel la vis de réglage (46) est vissée est formé dans le support de palier (58).

6. Chariot de manutention selon la revendication 5, **caractérisé en ce que** la vis de réglage (46) est guidée à travers un trou dans le cadre de charge (18) ou dans le cadre d'entraînement (10), et un contre-écrou (66) est disposé dans ce côté du cadre de charge (18) ou respectivement du cadre d'entraînement (10), qui est détourné du support de palier (58).

7. Chariot de manutention selon l'une quelconque des revendications 1 à 6, **caractérisé en ce que** le mécanisme à tringles (30, 32) a un élément d'ajustage, par lequel la hauteur de l'au moins une roue de charge (26) par rapport au bras de roue (20) peut être ajustée quand la partie de charge (16) est dans la position complètement abaissée par rapport à la partie d'entraînement.

8. Chariot de manutention selon l'une quelconque des revendications 1 à 7, **caractérisé en ce que** deux cylindres de levage (40) sont disposés en un écart latéral de l'un à l'autre, une vis de réglage (46) avec une butée (70) correspondante étant attribuée à chacun de ceux-ci.

9. Chariot de manutention selon l'une quelconque des revendications 1 à 8, **caractérisé en ce que** l'au moins un cylindre de levage (40) est relié à la partie d'entraînement, et le piston de levage (54) à la partie de charge (16).
